# EUROPEAN PATENT APPLICATION

(11) **EP 4 614 159 A1**
(43) Date of publication of application: **10.09.2025**
(21) Application number: 23885345.1
(22) Date of filing: 24.08.2023
(51) Int. Cl.: G01N 35/10, B08B 3/12

(54) **ULTRASONIC CLEANER AND AUTOMATIC ANALYSIS DEVICE USING SAME**

(30) Priority: 04.11.2022 JP 2022177314
(71) Applicant: HITACHI HIGH-TECH CORPORATION, Tokyo 105-6409 (JP)
(72) Inventor: HORIE Yosuke, Tokyo 100-8280 (JP); KOBAYASHI Ryo, Tokyo 100-8280 (JP); TAKAYAMA Hiroyuki, Tokyo 105-6409 (JP); NONAKA Kohei, Tokyo 105-6409 (JP)
(74) Representative: Strehl & Partner mbB
(86) International application number: PCT/JP2023/030495
(87) International publication number: WO 2024/095575

(57) **Abstract**

Provided is an ultrasonic cleaner including a cleaning tank including a liquid storage portion for storing a liquid, and an ultrasonic transducer including a piezoelectric element and a front mass, wherein the cleaning tank is provided, in its side surface portion, with a through hole having opening portions on the outer wall surface of the cleaning tank and on the inner wall surface of the liquid storage portion, the front mass is inserted in the through hole, a cover is installed so as to cover the upper side of the tip end surface of the front mass, and the cover is movable at least in an upward direction. Accordingly, it is possible to provide an ultrasonic cleaner structured suitably for being incorporated in a narrow space such as in a conveyance rack and capable of irradiating the outer peripheral portion of a nozzle with a strong ultrasonic wave, while hardly inducing liquid surface sway, liquid level fluctuations and mists.

## Description

### Technical Field

The present disclosure relates to an ultrasonic cleaner and an automatic analysis device using the same.

### Background Art

An automatic analysis device performs component analysis by mixing a sample such as serum or urine with a reagent, and measuring transmittance or the like of light directed to the mixed liquid. Such an automatic analysis device repeatedly uses the same nozzle for pipetting a sample and, therefore, performs a nozzle cleaning process for washing the tip end of the nozzle with water flows before aspirating a different sample. However, an automatic analysis device with high throughput performance performs pipetting processes at higher speeds, which makes it impossible to use a sufficient time period for cleaning a nozzle. Therefore, contamination derived from sample components may be accumulated at the tip end of the nozzle. For coping therewith, such contamination is removed by daily cleaning maintenance or the like.

If contamination is accumulated at the tip end of a nozzle, this tends to cause variations in the amount of a sample pipetted thereby, and carry-overs of components of a previous sample to a next sample, which deteriorates the measurement accuracy.

PTL 1 discloses an ultrasonic cleaner including a diaphragm to which a Bolt-clamped Langevin transducer (BLT) is attached, wherein a cleaning tank for storing a cleaning liquid is provided with an opening portion in its side surface, and this opening portion is closed by the diaphragm, so that cavitation is generated by ultrasonic waves (which is a phenomenon that bubbles are generated and extinct due to a pressure difference generated in the liquid), thereby cleaning a pipetting nozzle.

Further, PTL 2 discloses a cleaning rack including a cleaning tank, an ultrasonic wave generating element, and an electronic circuit for controlling the ultrasonic wave generating element, in order to automate maintenance operations, wherein the cleaning rack is adapted to clean a nozzle used for aspirating and discharging a sample or a reagent in the cleaning tank, and the cleaning rack is movable along a conveyance line.

PTL 3 discloses an ultrasonic cleaner. The ultrasonic cleaner includes a vibration head having a neck extending from an ultrasonic transducer toward a cleaning tank, and a tip end portion with a cylindrical hole having a longitudinal direction in a vertical direction. The ultrasonic cleaner further includes a cover having an opening corresponding to the neck and the cylindrical hole, wherein the cover is installed at such a height that the cover comes in contact with the liquid surface of a cleaning liquid, so as to cover the cleaning tank.

### Citation List

### Patent Literature

PTL 1: WO 2017/002740 A
PTL 2: JP 2014-89200 A
PTL 3: WO 2020/044998 A

### Summary of Invention

### Technical Problem

In a case of newly adding a unit capable of performing cleaning and maintenance of a nozzle to an automatic analysis device having been already delivered and actually used, it is desirable to add a small-size cleaning unit to a narrow space left between arranged parts or to temporarily add a cleaning unit thereto during maintenance. This is because large-scale hardware changes induce problems of an increase in modification cost, an occurrence of a time period during which analyses can not be performed, and the like.

The cleaning rack described in PTL 2 is structured to install the ultrasonic wave generating element (piezoelectric element) directly on the bottom surface or the side surface of the cleaning tank.

In a case where a piezoelectric element is installed in a general ultrasonic cleaner, a portion with a large area such as the bottom surface of a cleaning tank is used as a diaphragm, in order to amplify the amplitude of a surface irradiated with an ultrasonic wave, thereby generating a standing wave in a liquid through vibrations thereof. Such a standing wave has regions with higher sound pressures (antinode portions of the standing wave), and cavitation occurs in the same regions. In order to perform cleaning based on this principle, with a rack required to have a bottom surface (or side surface) with a smaller size (smaller area) as compared with that of a commercially available ultrasonic cleaner, it is impossible to generate a sufficient amplitude, which makes it difficult to provide a cleaning effect through generation of cavitation. This causes poor cleaning efficiency, in intensively cleaning the tip end of a nozzle with a small diameter of 1 mm or less, in particular.

In order to clean the outer periphery of a nozzle through ultrasonic waves, instead of manual cleaning maintenance, it is necessary to generate a high sound-pressure region where ultrasonic cavitation is stably generated, on the outer peripheral portion of the nozzle tip end.

As the ultrasonic cleaner described in PTL 1, there is illustrated an example of the structure adapted to vibrate a cleaning head provided at the tip end of an ultrasonic transducer, thereby generating ultrasonic wave cavitation in a hollow portion for inserting a nozzle therein, in order to intensively clean the nozzle tip end. In the same structure, strong cavitation is generated on the outer periphery of the nozzle tip end, using vibrations amplified by the cleaning head. However, in the structure, the cleaning head is inserted from above the liquid surface in the cleaning tank, and the cleaning head vibrates in the liquid and in the air with the liquid surface interposed therebetween, which causes large sway of the liquid surface, thereby causing a risk of fluctuations of the liquid level and scattering of the liquid. Therefore, this structure is not suitable for a conveyance type cleaning method. As in the same structure, a cleaning tank which allows liquid overflow is used in a cleaning device which causes large liquid sway, in order to keep the liquid level constant. However, for a conveyance type cleaning which is limited in size, it is difficult to use such a cleaning tank.

The ultrasonic cleaner described in PTL 3 includes the cover that covers the cleaning tank. However, the tip end portion of the vibration head has a specific shape, which makes it difficult to make it have a compact dimension (height). Further, attaching and detaching the cover necessitate time and efforts. Therefore, it is considered that there is room for improvement of this ultrasonic cleaner.

It is an object of the present disclosure to provide an ultrasonic cleaner structured suitably for being incorporated in a narrow space such as in a conveyance rack and capable of irradiating an outer peripheral portion of a nozzle with a strong ultrasonic wave, while hardly inducing liquid surface sway, liquid level fluctuations and mists.

### Solution to Problem

An ultrasonic cleaner according to the present disclosure includes:
a cleaning tank including a liquid storage portion for storing a liquid; and an ultrasonic transducer including a piezoelectric element and a front mass; wherein the cleaning tank is provided, in a side surface portion thereof, with a through hole having an opening portion on an outer wall surface of the cleaning tank and on an inner wall surface of the liquid storage portion, the front mass is inserted in the through hole, a cover is installed so as to cover an upper side of a tip end surface of the front mass, and the cover is movable at least in an upward direction.

### Advantageous Effects of Invention

According to the present disclosure, it is possible to provide an ultrasonic cleaner structured suitably for being incorporated in a narrow space such as in a conveyance rack and capable of irradiating an outer peripheral portion of a nozzle with a strong ultrasonic wave, while hardly inducing liquid surface sway, liquid level fluctuations and mists.

### Brief Description of Drawings

[FIG. 1] FIG. 1 is a perspective view illustrating an automatic analysis device in an example.
[FIG. 2A] FIG. 2A is a top view illustrating an example of the structure of a clean- ing unit in an ultrasonic cleaner in the example.
[FIG. 2B] FIG. 2B is a cross-sectional view taken along a line A-A in FIG. 2A.
[FIG. 2C] FIG. 2C is an enlarged view of the inside of a broken-line frame in FIG. 2B.
[FIG. 2D] FIG. 2D is a front view illustrating the cleaning unit in FIG. 2A.
[FIG. 2E] FIG. 2E is a side view illustrating the cleaning unit in FIG. 2AW
[FIG. 2F] FIG. 2F is a perspective view illustrating the cleaning unit in FIG. 2A.
[FIG. 2G] FIG. 2G is a front view illustrating a state where an upper block is removed from the cleaning unit in FIG. 2A.
[FIG. 2H] FIG. 2H is a perspective view illustrating a state where the upper block is removed from the cleaning unit in FIG. 2A.
[FIG. 3A] FIG. 3A is a schematic view illustrating a sound pressure distribution and flow velocities generated at the tip end portions of front masses in the ultrasonic cleaner, in a case where a cleaning tank is not provided with a cover.
[FIG. 3B] FIG. 3B is a schematic view illustrating a sound pressure distribution and flow velocities generated at the tip end portions of the front masses in the ultrasonic cleaner, in a case where the cleaning tank is provided with the cover.
[FIG. 4] FIG. 4 is a top view illustrating an example of placement of the cover in the cleaning tank in the example.
[FIG. 5] FIG. 5 is a structure view illustrating an example of a cleaning rack including the ultrasonic cleaner in the example.
[FIG. 6] FIG. 6 is a flowchart illustrating a method for cleaning a pipetting nozzle by the ultrasonic cleaner.
[FIG. 7] FIG. 7 is a graph illustrating an example of a pattern of driving ultrasonic transducers.
[FIG. 8] FIG. 8 is a structure view illustrating the automatic analysis device adapted to a case of using the ultrasonic cleaner incorporated in a conveyance rack in the example.

### Description of Embodiments

An ultrasonic cleaner according to the present disclosure includes a cleaning tank including a recess portion(liquid storage portion) which enables inserting a pipetting nozzle to be cleaned therein, and an ultrasonic transducer including a piezoelectric element and a front mass, wherein the cleaning tank is provided, in its side surface portion, with a through hole having opening portions on an outer wall surface of the cleaning tank and on an inner wall surface of the recess portion, the front mass is inserted in the through hole, and a tip end surface of the front mass is placed so as to irradiate the pipetting nozzle with an ultrasonic wave at its side portion.

In addition to the aforementioned structure, a detachable upper block is provided on an upper portion of the cleaning tank, and a cover covering the tip end portion of the front mass is disposed between the upper block and the cleaning tank, in a state of being not secured (in a state of floating due to rise of the liquid level). Further, it is desirable to provide an opening portion in the upper block, in its side closer to the basal portion of the front mass.

Hereinafter, examples of the present disclosure will be described in detail with reference to the drawings.

### Examples

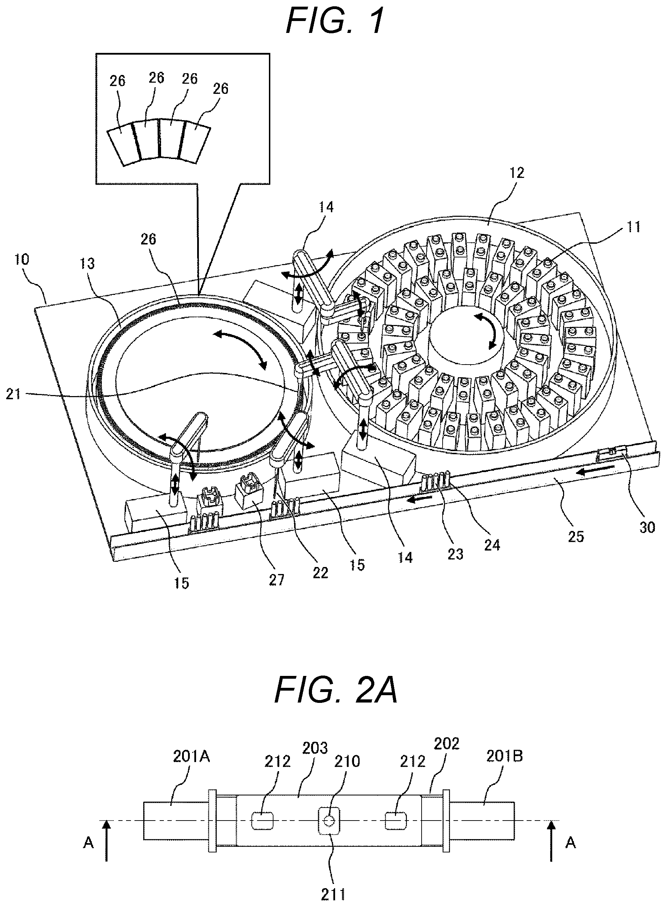

FIG. 1 is a perspective view illustrating an automatic analysis device in an example.

As illustrated in FIG. 1, the automatic analysis device 10 includes a reagent disk 12 for placing a plurality of reagent containers 11 thereon, a reaction disk 13 for mixing a reagent and a sample with each other and measuring a reaction thereof, reagent pipetting mechanisms 14 for aspirating and discharging the reagent, and sample pipetting mechanisms 15 for aspirating and discharging the sample.

Each reagent pipetting mechanism 14 includes a reagent nozzle 21 for pipetting the reagent. Each sample pipetting mechanism 15 includes a sample nozzle 22 for pipetting the sample. Here, nozzles such as the reagent nozzles 21 and the sample nozzles 22 will be collectively referred to as "pipetting nozzles".

The sample introduced into the device is installed in a rack 24 in a state of being contained in sample containers 23 (test tubes), and is conveyed by a conveyance line 25. A plurality of sample containers 23 are installed in the rack 24. The sample is a sample derived from blood such as serum or whole blood, urine, or the like.

Each sample pipetting mechanism 15 moves the sample nozzle 22 to an aspiration position at which the sample nozzle 22 aspirates the sample from a sample container 23, a discharge position at which the sample nozzle 22 discharges the sample to a cell 26 (cells 26 are small containers separated from each other, as illustrated in an enlarged manner in the figure), and a cleaning position at which there is a cleaning tank 27 for cleaning the tip end of the sample nozzle 22 with water. Further, each sample pipetting mechanism 15 lowers the sample nozzle 22, in accordance with the height of the sample container 23 at the aspiration position, the height of the cell 26 at the discharge position, and the height of the cleaning tank 27 at the cleaning position.

In summary, the sample pipetting mechanisms 15 are enabled to move the sample nozzle 22 to each of the stop positions through rotational movements and upward and downward movements.

Incidentally, the sample pipetting mechanisms 15, the conveyance line 25 and other devices are controlled by a control unit (not illustrated). Further, the automatic analysis device 10 includes a measurement unit (not illustrated), and performs photometry on the liquid composed of a mixture of the sample and the reagent, which is contained in the cells 26, thereby analyzing the concentration or the like of a predetermined component contained in the sample. The measurement unit includes a light source and a photometer, for example. The photometer is, for example, an absorp-tiometer or a scattering photometer.

A cleaning rack 30 incorporating an ultrasonic cleaner includes a cleaning unit which will be described later, and is used for cleaning the tip end portions of the sample nozzles 22 having come in contact with the sample. The timing of use thereof is timing of daily maintenance of the automatic analysis device 10, and the cleaning is performed before or after analyses in many cases. In a case where a large number of samples are handled in a day, the cleaning rack 30 may be flowed through the conveyance line 25 between analyses. This can maintain the sample nozzles 22 clean.

The cleaning rack 30 can clean the sample nozzles 22 or the reagent nozzles 21 regardless of the sample, as long as the sample nozzles 22 or the reagent nozzle 21 can access the conveyance line 25. Further, the cleaning rack 30 can clean plural sample nozzles 22 during one conveyance. However, due to reuse of a cleaning liquid contaminated as a result of cleaning, there is a possibility of re-adhesion of the contamination. Therefore, it is desirable to replace the cleaning liquid for each nozzle. In this case, one cleaning rack 30 may be flowed plural times through the conveyance line 25, or plural cleaning racks 30 may be flowed therethrough.

As a method for conveying the conveyance line 25, it is possible to adopt a method using a belt, a pushing claw, or the like movable along the conveyance line 25, a method using electromagnetic force, or the like.

FIG. 2A is a top view illustrating an example of the structure of the cleaning unit in the ultrasonic cleaner in the present example.

In the figure, the cleaning unit includes two ultrasonic transducers 201A and 201B (vibration exciters), a cleaning tank 202, and an upper block 203 attached to an upper portion of the cleaning tank 202. The upper block 203 is provided with a through hole 211 and opening portions 212. The through hole 211 is provided in order to clean the sample nozzles. The through hole 211 is provided at a position where there is exposed a cleaning hole 210 provided in a cover, which will be described later. A sample nozzle is inserted through the cleaning hole 210 into the liquid therebelow. Therefore, the through hole 211 is also referred to as a "cleaning opening portion".

The opening portions 212 are provided in order to supply the liquid to a liquid storage portion in the cleaning tank 202. The opening portions 212 also have a role of alleviating fluctuation of the liquid level, which will be described later. Accordingly, the opening portions 212 are also referred to as "liquid-pouring opening portions".

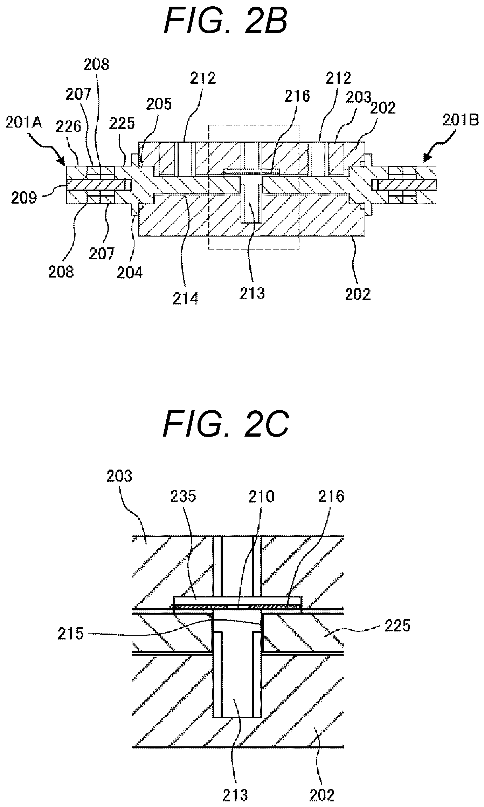

FIG. 2B is a cross-sectional view taken along a line A-A in FIG. 2A.

As illustrated in FIG. 2B, the liquid storage portion 213, which is a recess portion provided at a center portion of the cleaning tank 202, is provided with through holes 214 penetrating the liquid storage portion 213 from the left side and the right side in the figure. In other words, each through hole 214 has opening portions on the inner wall surface of the liquid storage portion 213 (the recess portion) and on an outer wall surface of the cleaning tank 202, in a side surface portion of the cleaning tank 202. The ultrasonic transducers 201A and 201B are respectively inserted into the two through holes 214. The ultrasonic transducers 201A and 201B are secured to the side surfaces of the cleaning tank 202 through flanges 204 and seals 205 (O-rings).

The flanges 204 may be components separated from the ultrasonic transducers 201A and 202B. In practice, the flanges 204 (or other securing components for pressing the ultrasonic transducers 201A and 201B) are pressed against the cleaning tank 202 through screws or the like including fastening bolts 209, thereby securing the ultrasonic transducers 201A and 201B thereto. This structure can prevent liquid leakage through the through hole 211.

The ultrasonic transducers 201A and 201B have the same structure.

Each ultrasonic transducer 201A and 201B is constituted by a front mass 225 (front-side metal block), a back mass 226 (back-side metal block), a plurality of piezoelectric elements 207, a plurality of electrodes 208 (copper plates), and a fastening bolt 209. The piezoelectric elements 207 and the electrodes 208 are structured such that two piezoelectric elements 207 and two electrodes 208 are alternately stacked. The piezoelectric elements 207 and electrodes 208 which are stacked are sandwiched between the front mass 225 and the back mass 226, and are secured thereto by the fastening bolt 209.

Incidentally, regarding the numbers of the piezoelectric elements 207 and the electrodes 208, two piezoelectric elements 207 and two electrodes 208 are alternately stacked in this figure, but the ultrasonic transducers according to the present disclosure are not limited thereto, and four piezoelectric elements 207 and four electrodes 208 may be alternately stacked, or the numbers of them may be other than four.

Each of the ultrasonic transducers 201A and 201B has a metal portion with an elongated cylindrical shape at its tip end. In other words, the tip end portion of the front mass 225 is made of an elongated cylindrical metal.

In summary, the ultrasonic transducers 201A and 201B are secured by being fastened by a bolt, similarly to a general Bolt-clamped Langevin type transducer (BLT). The BLT structure is advantageous in amplifying an amplitude and, therefore, is employed in cases of using strong ultrasonic waves. Thus, the BLT structure is also used in industrial ultrasonic cleaners required to have strong cleaning performance.

FIG. 2C is an enlarged view of the inside of a broken-line frame in FIG. 2B, illustrating details of a main part of the cleaning unit.

As illustrated in FIG. 2C, the upper block 203 is provided with a recess portion 235, in its lower surface.

The recess portion 235 is positioned above the liquid storage portion 213 and the tip end surfaces 215 of the front masses 225.

A cover 216 is installed between the cleaning tank 202 and the upper block 203. The cover 216 is made to have a width dimension smaller than that of the recess portion 235. The cover 216 is provided with the cleaning hole 210 at its center portion. Since the recess portion 235 has a width dimension larger than that of the cover 216, the recess portion 235 forms a space that allows the cover 216 to move therein, when the cover 216 floats on the liquid surface therebelow.

In order to prevent the liquid from overflowing to above the upper surface of the cover 216, it is desirable to use a resin that floats on the liquid, or the like, as the material of the cover 216. Conversely, when there is the liquid above the cover 216, it is desirable to use a metal that does not float on the liquid, thereby blocking ultrasonic waves. Even when the cover 216 is made of a metal, in a case where it is an aluminum alloy foil, the cover 216 floats on the liquid surface.

The ultrasonic transducers 201A, 201B are driven at a resonance frequency, which maximizes the amplitudes of the tip end surfaces 215 of the front masses 225.

Each ultrasonic transducer 201A, 201B is desirably structured to induce a node of vibrations (a region where there is always a smaller amplitude), in the range from the flange 204 to the stepped portion (the portion of the connection between the small diameter portion and the large diameter portion) of the front mass 225. The seal 205 is made of an elastic material. This decreases the influence of the contact between the front mass 225 and the seal 205.

The through holes 214 for passing the front masses 225 therethrough are formed in a columnar shape by combining the cleaning tank 202 and the upper block 203 with each other. Depending on the shape of the ultrasonic transducers 201A and 201B to be used, the through holes 214 may be provided with an inclination or a step at their base portions. Further, there is formed a substantially uniform gap between the wall surfaces of the through holes 211 and the ultrasonic transducers 201A and 201B. The seals 205 are disposed near the bases of the columnar portion, thereby preventing liquid leakage through the through holes 211. Consequently, the tip end portions of the front masses 225, which are largely deformed during driving the ultrasonic transducers 201A and 201B, can transmit vibrations to the liquid in the liquid storage portion 213, without being inhibited from deforming and without coming in contact with the wall surfaces of the through holes 211.

The liquid storage portion 213 can contain the liquid injected through the opening portions 212 up to the bottom surface of the cover 216. Thus, the gap formed around the columnar portions of the front masses 225 inserted in the through holes 211 is filled with the liquid. For a reason which will be described later, even when the liquid surface is above the cover 216, it is possible to provide the effect of the ultrasonic cleaner according to the present disclosure.

When the liquid has been injected into the liquid storage portion 213, the tip end surfaces 215 of the front masses 225 are immersed in the liquid. In this state, the two ultrasonic transducers 201 are driven, thereby irradiating the inside of the liquid with ultrasonic waves from the tip end surfaces 215. It is desirable that the upper end portions of the tip end surfaces 215, which are ultrasonic-wave irradiation portions, are at about 0.5 to 1 mm from the liquid surface. With this placement, it is possible to intensively clean only the portion of the sample nozzle which is being immersed in the liquid. Namely, it is desirable that the distance between the lower surface of the cover 216 and the upper ends of the tip end surfaces 215 is about 0.5 to 1 mm.

If the tip end surfaces 215 are disposed deeply from the liquid surface, the cleaning region is far from the liquid level. Therefore, in order to clean the tip end portion of a sample nozzle, it is necessary to insert the sample nozzle deeply into the liquid. Such a placement causes the sample nozzle to get wet over a wider range thereof. The sample nozzles are designed to secure the pipetting accuracy by limiting the range to be wetted by the liquid. Therefore, it is desirable that the sample nozzles are not wetted over a wide range. Therefore, it is desirable to provide the cleaning region near the liquid surface.

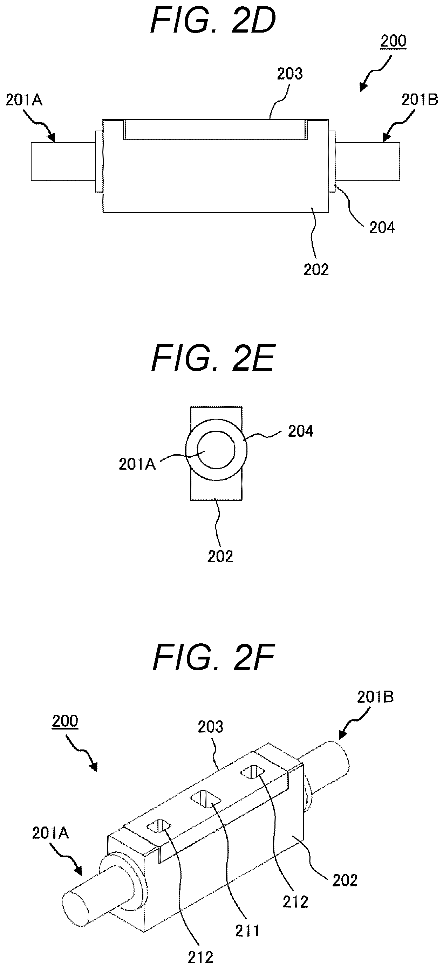

FIG. 2D is a front view illustrating the cleaning unit in FIG. 2A.

In the cleaning unit 200 illustrated in FIG. 2D, the upper block 203 is coupled to an upper portion of the cleaning tank 202. The upper block 203 may be constituted by two or more parts. By sandwiching the cover 216 between these two or more parts, it is possible to integrate these parts with the cover 216, which makes it easier to remove and attach them from and to the cleaning tank 202 in cleaning the cleaning tank 202.

FIG. 2E is a side view illustrating the cleaning unit in FIG. 2A.

In FIG. 2E, the flange 204 has a circular shape. However, the flanges 204 may be partially cut away into a shape other than a circular shape, in order that the flanges 204 have a size fittable onto the size of the cleaning tank 202.

FIG. 2F is a perspective view illustrating the cleaning unit in FIG. 2A.

The upper block 203 is provided, in its upper surface, with the through hole 211, and the opening portions 212 for supplying the liquid thereto, all of which can be accessed from above. Namely, a cleaning liquid can be supplied through the opening portions 212, and a sample nozzle can be inserted through the through hole 211.

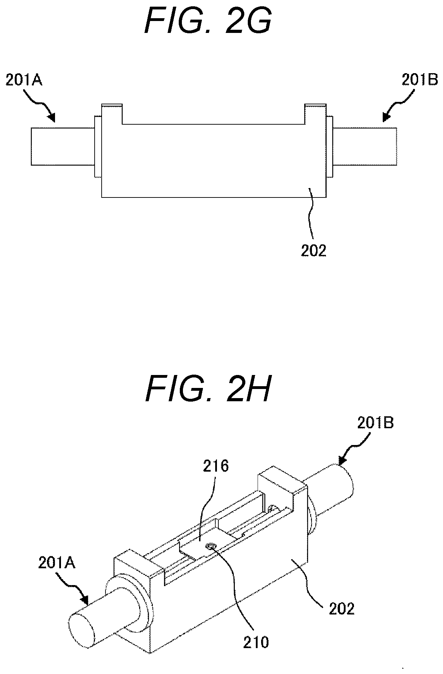

FIG. 2G is a side view illustrating the cleaning unit in FIG. 2A in a state where the upper block 203 is removed therefrom.

FIG. 2H is a perspective view illustrating the cleaning unit in FIG. 2A in a state where the upper block 203 is removed therefrom.

As illustrated in FIG. 2H, by removing the upper block 203, the front masses 225 of the ultrasonic transducers 201 are exposed, which enables cleaning the inside. When the cover 216 takes the form of being secured to the upper block 203 as described above, the cover 216 can be removed together therewith, during cleaning. This improves the operability during cleaning. In cleaning the inside of the cleaning tank 202, it is possible to remove dirt by directly applying flowing water such as tap water thereto.

As illustrated in FIG. 2F, the upper block 203 is provided with the two opening portions 212 and the through hole 211. Consequently, for example, even when flowing water being tap water is directly poured into one of the opening portions 212, the water is drained through the other opening portion 212 and the through hole 211, which enables easily cleaning the inside. Namely, in daily cleaning, it is possible to clean the cleaning tank in a state where the upper block 203 is attached thereto, without removing the upper block 203 therefrom. Only in periodic cleaning which is performed once in several weeks, it is possible to clean the inside by removing the upper block 203 therefrom.

Although not illustrated, in order to enable directly applying flowing water to the cleaning unit 200, it is necessary to protect electric components such as the ultrasonic transducers 201 through a cover or the like for waterproofing. For example, in the aspect of the cleaning rack 30 illustrated in FIG. 1, the cleaning unit 200 is placed in a casing, so that the ultrasonic transducers 201 are covered therewith and are prevented from being directly wetted by water and the like.

The cleaning unit 200 desirably has such a size as to be accommodated in the rack 24. By making the cleaning unit 200 have such a size, it is possible to move the cleaning unit 200 to the position of a sample nozzle 22, and it is possible to clean it.

In the present example, there is illustrated a case where there is one upper block 203, but the ultrasonic cleaner according to the present disclosure is not limited thereto. For example, the upper block 203 can be divided into two upper blocks, each of the upper blocks can be provided with one opening portion 212, and the two upper blocks can be placed in such a way as to provide a gap therebetween. Thus, the gap can be used instead of the through hole 211. This eliminates the necessity of providing the through hole 211. In this case, the cover 216 may be sandwiched between the cleaning tank 202 and one of the two upper blocks.

Next, there will be described a state of an ultrasonic wave directed to the inside of the liquid from the tip end portions of the front masses 225 of the ultrasonic transducers 201.

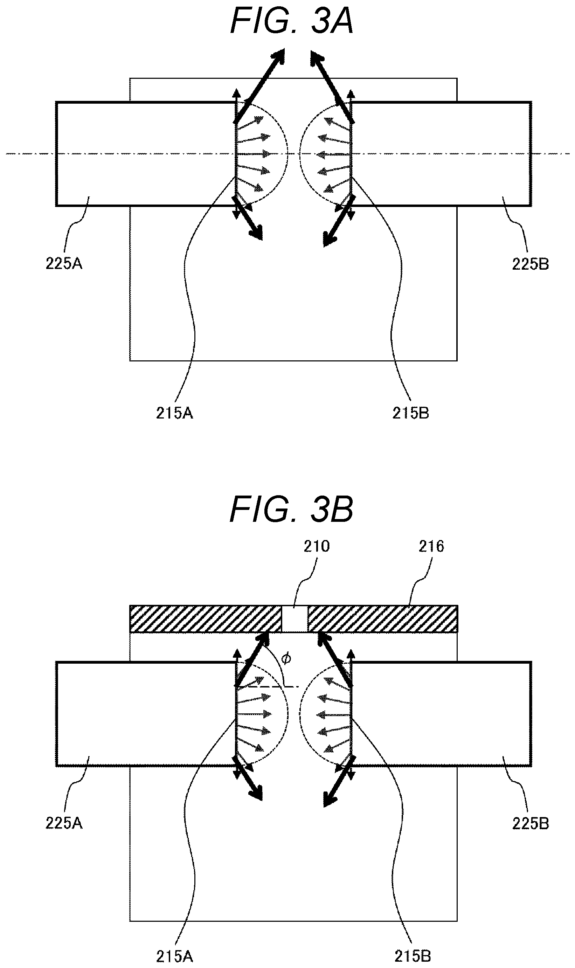

FIG. 3A is a schematic view illustrating a sound pressure distribution and flow velocities generated at the tip end portions of the front masses in the ultrasonic cleaner, in a case where the cleaning tank is not provided with the cover.

FIG. 3B is a schematic view illustrating a sound pressure distribution and flow velocities generated at the tip end portions of the front masses in the ultrasonic cleaner, in a case where the cleaning tank is provided with the cover.

In these figures, arrows are vectors indicating flows of the liquid, and thick arrows indicate portions with highest flow velocities. Further, semicircles indicated by dotted lines indicate regions where there are higher sound pressures.

Sound wave analyses have revealed that flows of the liquid are generated in the directions of the arrows, from the tip end surfaces 215A and 215B of the front masses 225 A and 225B, by driving the ultrasonic transducers 201 at a resonance frequency. In particular, in the structure illustrated in FIG. 3A, the thick-line arrows extending toward the liquid surface have been confirmed, from a situation where the liquid overflows to the outside of the cleaning tank 202 (a phenomenon of occurrence of a liquid column), from results of experiments and observations. This phenomenon occurs similarly in a case where only one of the ultrasonic transducers 201 is driven. The cover 216 has effects which will be described later, similarly in a case where there is one ultrasonic transducer 201.

If the liquid surface greatly sways due to the ultrasonic transducers 201 being driven, this causes the sample nozzle 22 to be wetted over a wider range, thereby causing the sample nozzle 22 to bring the cleaning water into another sample or the like. Also, this causes a failure of a liquid level detection sensor incorporated in the sample nozzle 22. Further, the liquid overflows from the cleaning tank 202, thereby wetting the conveyance line 25 and its surrounding, which is a problem. Furthermore, if a cleaning liquid overflows and the liquid level descends to expose the tip ends of the ultrasonic transducers 201 in the air, this causes a mist. If this mist wets surroundings and the sample nozzle 22, this leads to the aforementioned problem.

Referring to FIG. 3B, portions with higher flow velocities, which are indicated by thick arrows, collide with the cover 216 provided on the liquid surface. This can prevent overflows. Assuming that an origin point is at the center of each tip end surface, which is the point at which the center axis of each front mass 225A, 225B intersects the tip end surface 215A, 215B, it is desirable to cover the range of about 60 degrees to 90 degrees, and it is more desirable to cover the range of about 50 degrees to 90 degrees, with respect to the direction of the center axis of each front mass 225A, 225B. This can prevent overflows due to generation of a liquid column. In particular, immediately after the start of driving of the ultrasonic transducers 201, strong water flows are generated, thereby temporarily raising the liquid level around the cleaning hole 210. If the liquid level exceeds the cover 216, the liquid may remain on the upper surface of the cover 216 to decrease the amount of the liquid in the cleaning tank 202, thereby inducing a mist.

In the present example, the cover 216 is not secured, so that the cover 216 is movable along with ascent and descent of the liquid. This can absorb temporary rises of the liquid, which can prevent overflows of the liquid after driving the ultrasonic transducers 201.

Besides the cover 216, the opening portions 212 illustrated in FIG. 2F exist in regions where the amplitudes of the ultrasonic transducers 201 are smaller than at the tip ends. Therefore, the opening portions 212 are positioned in the regions where the liquid level is less fluctuated due to the ultrasonic transducers 201 being driven.

Conversely, providing the opening portions 212 provides an effect of absorbing flow velocity fluctuations between the tip end surfaces 215A and 215B. For example, in a case where the opening portions 212 are not provided, if the pressure increases in the cleaning tank 202, this causes a concentration of fluctuations of the liquid level around the cleaning hole 210, since there is no other region for releasing the pressure than the cleaning hole 210. However, by providing the opening portions 212, it is possible to provide plural regions for allowing the pressure to escape, thereby providing an effect of dispersing fluctuations of the liquid level in the cleaning hole 210.

As described above, by suppressing portions with higher flow velocities generated from the tip end surfaces 225A and 225B of the front masses 215A and 215B, the liquid is prevented from overflowing from the cleaning tank 202. This enables cleaning the sample nozzles 22 without wetting the conveyance line 25 and outside of the ranges of the sample nozzles 22 to be cleaned.

In the present example, the effect of the cover 216 has been described regarding the structure of the cover 216 floated on the liquid level. However, for example, even with a cover of a type opened and closed by an actuator, it is possible to provide the same effect, provided that the cover covers the aforementioned range. For example, it is possible to employ an opening/closing mechanism adapted to open the cover before the sample nozzle 22 passes therethrough and adapted to close the cover after the sample nozzle 22 has been inserted. Examples of the structure include a lens cover mechanism for a digital camera.

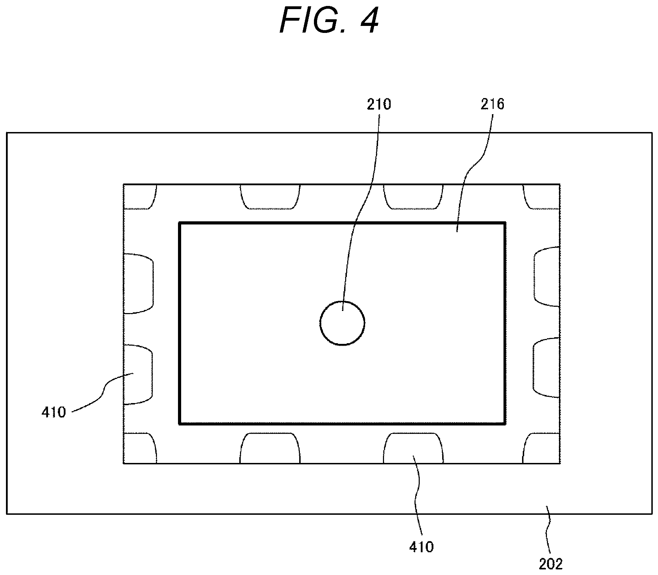

FIG. 4 is a top view illustrating an example of the placement of the cover in the cleaning tank in the example.

In this figure, there is illustrated an example of the relationship between the cover 216 and the wall surface of the cleaning tank 202.

As described above, the cover 216 is not secured to the cleaning tank 202. Furthermore, in order to prevent the cover 216 from being restrained by the surface tension of the liquid, it is desirable to provide convex portions 410 on the inner wall surface of the cleaning tank 202 so as to reduce the portions which come in contact with the cover 216, as illustrated in this figure.

If there is too large a gap between the wall surface of the cleaning tank 202 and the cover 216, the position of the cleaning hole 210 largely deviates due to sway and fluctuations of the liquid surface, which increases the risk of contact between a sample nozzle 22 and the cover 216 at the time of insertion of the sample nozzle 22. Therefore, it is desirable to design the dimension of the gap between the wall surface of the cleaning tank 202 and the cover 216, in consideration of the outer diameter and the stop accuracy of the sample nozzles 22, and the shape, size, and the like of the cleaning hole 210.

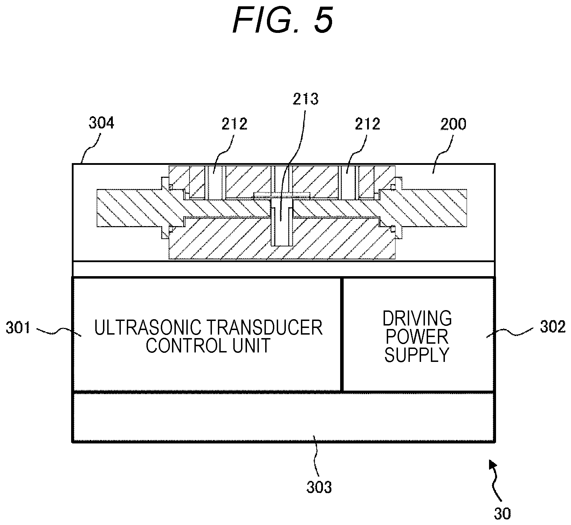

FIG. 5 is a structure view illustrating an example of the cleaning rack including the ultrasonic cleaner in the present example.

As illustrated in this figure, the cleaning rack 30 includes the cleaning unit 200, an ultrasonic transducer control unit 301, a driving power supply 302 (battery), and a conveyance base 303. The ultrasonic transducer control unit 301 controls driving of the ultrasonic transducers 201A and 201B (FIG. 2A).

The ultrasonic transducer control unit 301 generates a sine wave with a resonance frequency of the ultrasonic transducers 201A and 201B, thereby driving the ultrasonic transducers 201. Further, the ultrasonic transducer control unit 301 further includes an impedance matching circuit for increasing an electric current for driving the ultrasonic transducers 201 for amplifying the amplitudes, and a circuit for automatically tracking the resonance frequency.

The driving power supply 302 is constituted by a rechargeable battery, which is charged each time the cleaning rack 30 is used. A time period of cleaning a sample nozzle 22 is in a range of several minutes or less. Thus, it is not necessary to drive the ultrasonic transducers for a long time period. Therefore, a small battery is sufficient. Charging of the driving power supply 302 may be enabled by installing a wireless power supply unit at a predetermined position adjacent to the conveyance line 25.

The conveyance base 303 has the same shape as that of the bottom portion of the rack 24 used for the sample containers 23. Therefore, it is not necessary to change the hardware of the conveyance line 25. Incidentally, the cleaning rack 30 including the cleaning unit 200, the ultrasonic transducer control unit 301, and the driving power supply 302 has a size equal to or smaller than that of the rack 24 in a state where a conventional sample containers 23 are installed therein.

The cleaning unit 200 is covered with a cover 304. The cover 304 prevents electrical components such as the piezoelectric elements 207 and the electrodes 208 from being spattered with the liquid, in supplying and discharging the liquid to and from the opening portions 212 using a pipette or the like.

As described above, the ultrasonic transducers 201 are sealed at the nodes of vibrations, which increases the vibration amplification efficiency. Further, the tip end surfaces 215 of the ultrasonic transducers 201 are placed close to the side surface portion of the sample nozzle 22, which enables irradiating the sample nozzle 22 with strong ultrasonic waves, thereby enhancing the cleaning effect. Further, by irradiation with ultrasonic waves in two directions, it is possible to realize a structure capable of cleaning even in a narrow space such as in the cleaning rack 30 with a small size.

The amount of the cleaning liquid required for cleaning is about several hundred microliters to several milliliters, although it varies depending on the size of the liquid storage portion 213. Further, as the cleaning liquid, it is possible to use water, which can provide a cleaning effect. However, it is possible to use, whereas, a mixture of water and a detergent, or a detergent itself.

As described above, the automatic analysis device according to the present disclosure is structured to use the ultrasonic cleaner in the present example, in such a way as to convey it.

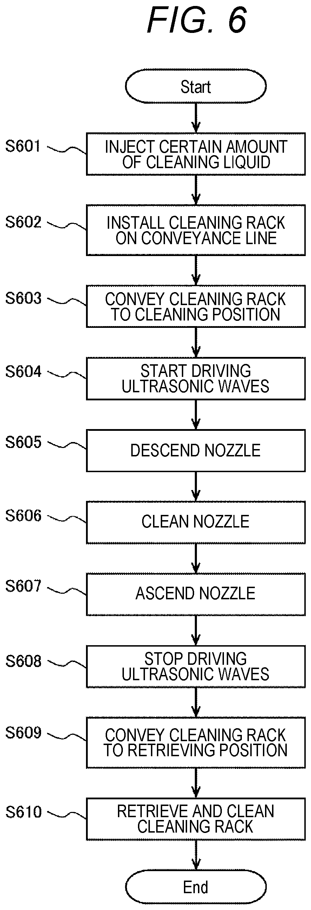

FIG. 6 is a flowchart illustrating a method for cleaning a pipetting nozzle by the ultrasonic cleaner in the present example.

As illustrated in this figure, a cleaning liquid is injected through the opening portions 212 of the cleaning unit 200 (step S601). As a result, the liquid storage portion 213 is filled with the cleaning liquid. At this time, it is possible to inject the liquid thereto without causing the liquid surface to exceed the cover 216, by using a container with a dedicated size which is not capable of containing the liquid in an amount equal to or larger than the amount which occupies the capacity of the liquid storage portion 213. Also, it is possible to inject the liquid thereto, by setting the amount of the liquid discharged from a pipette to be equal to the capacity of the liquid storage portion 213.

As described above, it is not preferable to inject the liquid beyond the cover 216, since the sample nozzles 22 should be prevented from being wetted outside the to-be-cleaned region thereof. Therefore, it is desirable to use a method capable of injecting the liquid in the same amount as the capacity of the liquid storage portion 213.

After the injection of the liquid, the cleaning rack 30 is installed on the conveyance line 25 (step S602). Then, under the control of the automatic analysis device 10, the cleaning rack 30 is conveyed to the cleaning position (step S603), and an automatic cleaning operation is started.

The cleaning rack 30 incorporates a communication function, which will be described later, and is capable of starting driving, according to an instruction from the control unit in the automatic analysis device 10. The cleaning rack 30 starts driving ultrasonic waves, after stopping at the cleaning position (step S604).

Here, the steps S601 to S603 can either be performed manually or be performed automatically using a cleaning-liquid pipetting unit or the like installed in the automatic analysis device 10. In this case, if a command signal for starting the automatic cleaning function is sent from a terminal of the automatic analysis device 10 as in the step S604, the cleaning rack 30 is automatically installed on the conveyance line 25, and the cleaning liquid is automatically injected into the liquid storage portion 213 in the cleaning unit 200.

When the normal rack 24 is conveyed, it is possible to branch off the subsequent analysis and conveyance processes, by reading a barcode attached to a side surface of the rack 24. Therefore, by attaching a barcode to the cleaning rack 30 at the same position as that of the normal rack 24, it is possible to distinguish the rack 24 used for inspection and the cleaning rack 30 used for cleaning, from each other, in the automatic analysis device 10, thereby making it possible to perform a maintenance operation for cleaning.

After the conveyance of the cleaning rack 30 to the vicinity of a target sample nozzle 22, the sample nozzle 22 is descended toward the liquid storage portion 213 (step S605), and the tip end portion of the sample nozzle 22 is immersed in the cleaning liquid for a certain time period, so that it is cleaned (step S606). After completion of the cleaning, the sample nozzle 22 is ascended and, then, the cleaning rack 30 is carried out (step S607). The driving of ultrasonic waves is stopped (step S608), according to an instruction from the control unit in the automatic analysis device 10, using the aforementioned communication function. The driving of ultrasonic waves can be also stopped, after the elapse of a certain time period, by using a timer function incorporated therein.

Then, the cleaning rack 30 is conveyed to a position where the cleaning rack is to be retrieved (step S609), and the cleaning rack is retrieved and cleaned (step S610). For the cleaning, as described above, it is possible to employ a method for cleaning the cleaning rack 30 by flowing water thereinto through the opening portions 212 of the upper block 203, or a method for cleaning the cleaning rack 30 by removing the upper block 203.

If necessary, the cleaning liquid may be replaced, and another sample nozzle 22 may be subsequently cleaned. In a case where the cleaning is not performed, the cleaning liquid is discharged, and the cleaning is ended.

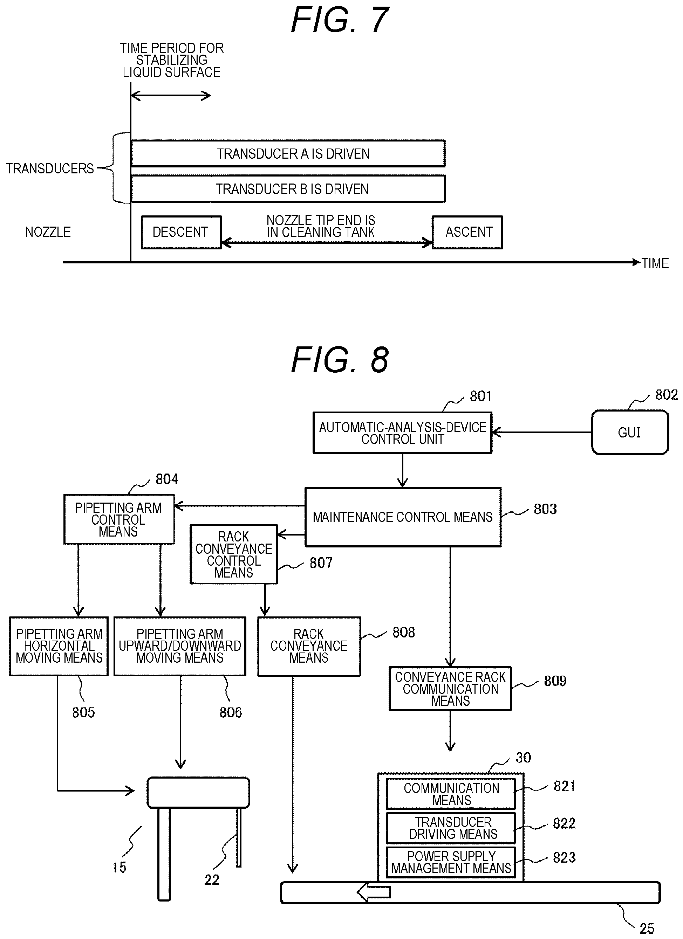

FIG. 7 is a graph illustrating an example of a pattern of driving the two ultrasonic transducers.

In this figure, there is illustrated an interval from the start of descent of a sample nozzle 22 toward the liquid storage portion 213 to the end of ascent thereof.

The ultrasonic transducers A and B having started being driven by the aforementioned method are repeatedly driven before descent of a sample nozzle 22 or at the same timing as the descending operation. In this case, if there is a certain extent of time difference between the driving of the ultrasonic transducers A and B and the operation for descending the sample nozzle 22, such a time difference is allowed.

In this driving pattern, it is desirable to drive the ultrasonic transducers A and B by the same output. A control circuit outputs one signal for driving the transducers, and this signal is branched, and signals resulted from the branching are outputted to the ultrasonic transducers A and B. In this case, in the ultrasonic transducer control unit 301, the resonance frequency of any one of the ultrasonic transducers A and B is automatically tracked, or the ultrasonic transducers A and B are driven at a frequency near (or intermediate between) the resonance frequencies of the two ultrasonic transducers A and B. In order to drive the ultrasonic transducers A and B at a frequency near the resonance frequencies of the two ultrasonic transducers A and B, it is possible to employ a method for determining the driving frequency from a preliminarily-measured frequency, and a method for changing the driving frequency as required by using an additional circuit for detecting the resonance frequencies during driving.

Since the ultrasonic transducers A and B have a simple shape, there are small variations in resonance frequency due to manufacturing and assembling of the transducers. Therefore, the two ultrasonic transducers A and B can be driven with a large amplitude, at a driving frequency near the resonance frequencies of the two ultrasonic transducers A and B.

As described above, due to the effect of the cover 216, it is possible to suppress portions with higher flow velocities, which are generated from the tip end surfaces 215 after the start of driving of the ultrasonic transducers A and B. This prevents overflows of the liquid from the cleaning tank 202. This shortens the time period required for stabilizing the liquid surface, which can shorten the time period from the start of driving of the ultrasonic transducers A and B to the end of descent of the nozzle. Namely, even if the ultrasonic transducers A and B starts being driven immediately before insertion of a sample nozzle 22, it is possible to perform stable cleaning.

FIG. 8 is a structure view illustrating the automatic analysis device adapted to a case of using the ultrasonic cleaner incorporated in the conveyance rack in the present example.

In this figure, the automatic analysis device is controlled by an automatic-analysis-device control unit 801. A user of the automatic analysis device can make an instruction for an analysis process or a cleaning process, through a graphical user interface 802 (GUI). A normal analysis process and a cleaning maintenance mode in the present example are performed by a maintenance control means 803, which controls the sample pipetting mechanisms 15 and the conveyance line 25.

In each sample pipetting mechanism 15, the position of a sample nozzle 22 is controlled through a pipetting arm control means 804 (pipetting arm control unit) and, then, through a pipetting arm horizontal moving means 805 (pipetting arm horizontal moving unit) and a pipetting arm upward/downward moving means 806 (pipetting arm upward/downward moving unit). In the maintenance mode, the horizontal position and the upward/downward position of the sample nozzle 22 are controlled such that the to-be-cleaned range of the tip end portion of the sample nozzle 22 is immersed in the liquid in the liquid storage portion 213.

Namely, the to-be-cleaned object is positioned at such a depth that the to-be-cleaned object is immersed in the cleaning liquid. The horizontal position of the sample nozzle 22 is preferably a position intermediate between the two tip end surfaces 215. It is also possible to control it in such a way as to move the sample nozzle 22 horizontally to the vicinity of the tip end surface 215 A or the tip end surface 215B, while immersing the sample nozzle 22.

The conveyance line 25 is driven through a rack conveyance control means 807 (rack conveyance control unit) and, then, through a rack conveyance means 808 (rack conveyance unit).

The cleaning rack 30 includes a communication means 821 that communicates with the automatic analysis device, a transducer driving means 822 (transducer driving unit) that detects and drives the resonance frequency of the ultrasonic transducers 201, and a power supply management means 823 that manages the state of the driving power supply 302, independently of the automatic-analysis-device control unit 801.

The communication means 821 controls the start and the end of driving of the ultrasonic transducers 201 by the transducer driving means 822, according to an instruction from the automatic analysis device 10, as described above.

The power supply management means 823 manages the state of charging of the driving power supply 302, and indicates the state thereof to the outside, through the communication means 821, or through a method for displaying an LED provided on the cleaning rack 30 in such a way as to change the color of the LED.

With the aforementioned structure, the cleaning rack 30 is conveyed to a position on the conveyance line 25 which can be accessed by a sample nozzle 22, the ultrasonic transducers 201 incorporated in the cleaning rack 30 start being driven, and the sample nozzle 22 is immersed in the liquid storage portion 213, so that the to-be-cleaned region of the sample nozzle 22 can be cleaned.

Incidentally, the same structure can be implemented for the reagent nozzles 21, provided that the reagent nozzles 21 can access the conveyance line 25.

Although, in the present example, there has been described a case where the reagent nozzles 21 and the sample nozzles 22 are separately provided, a reagent and a sample may be pipetted by one common nozzle, depending on the analysis device. Even such a device necessitates daily maintenance, even though cleaning is performed through water flows every time a reagent or a sample is pipetted. Thus, by performing ultrasonic cleaning according to the present disclosure, it is possible to maintain the pipetting accuracy.

Furthermore, according to the present disclosure, it is possible to facilitate attachment and detachment of the cover, in a state where the ultrasonic transducers are attached.

Incidentally, although, in the aforementioned example, there has been described a structure having the tip end surfaces 215 A and 215B of the two ultrasonic transducers 201A and 201B placed oppositely to each other, the ultrasonic cleaner according to the present disclosure is not limited thereto, and covers a case where one ultrasonic transducer is installed horizontally.

Hereinafter, desirable embodiments according to the present disclosure will be collectively described.

A plurality of the ultrasonic transducers is installed on a side surface portion of the cleaning tank.

A pipetting nozzle as an object to be cleaned can be inserted in the liquid storage portion, and the cover is provided with the cleaning hole having an inner diameter larger than an outer diameter of the pipetting nozzle.

The cover has a limited movable range in the horizontal direction, so as to be maintained at a state of being separated from the pipetting nozzle inserted through the cleaning hole.

The upper block covering the front masses are installed on the cleaning tank, and the upper block is provided with the liquid-pouring opening portion for injecting a liquid into the liquid storage portion.

The upper block is provided with the cleaning opening portion for inserting the pipetting nozzle therethrough.

The cover covers the range from 60 degrees to 90 degrees with respect to the direction of the central axis of each front mass, assuming that an origin point is at the center of each tip end surface, which is the point at which the central axis of each front mass intersects the tip end surface of the front mass.

The liquid-pouring opening portion in the upper block is provided between the tip end surface of a front mass and the through hole into which the front mass is inserted.

The upper block is structured such that the upper block can be removed from the cleaning tank to expose the front masses.

The cover is made of a resin or a metal.

The upper block covering the front masses is installed on the cleaning tank, the upper block is provided with two liquid-pouring opening portions for injecting the liquid into the liquid storage portion, and the cleaning opening portion for inserting the pipetting nozzle therethrough, wherein the cleaning opening portion is provided between the two liquid-pouring opening portions.

The cleaning tank is provided, on its inner wall surface, with a protruding portion that comes in contact with the cover.

The automatic analysis device has a mechanism for conveying the ultrasonic cleaner through the conveyance line and for cleaning the pipetting nozzle.

### Reference Signs List

- 10: automatic analysis device
- 11: reagent container
- 12: reagent disk
- 13: reaction disk
- 14: reagent pipetting mechanism
- 15: sample pipetting mechanism
- 21: reagent nozzle
- 22: sample nozzle
- 23: sample container
- 24: rack
- 25: conveyance line
- 26: cell
- 27: cleaning tank
- 30: cleaning rack
- 201,: 201A, 201B ultrasonic transducer
- 202: cleaning tank
- 203: upper block
- 204: flange
- 205: seal
- 207: piezoelectric element
- 208: electrode
- 209: fastening bolt
- 210: cleaning hole
- 211: through hole
- 212: opening portion
- 213: liquid storage portion
- 215,: 215A, 215B tip end surface
- 216: cover
- 225: front mass
- 226: back mass
- 301: ultrasonic transducer control unit
- 302: driving power supply
- 303: conveyance base
- 304: cover
- 801: automatic-analysis-device control unit
- 802: graphical user interface
- 803: maintenance control means
- 804: pipetting arm control means
- 805: pipetting arm horizontal moving means
- 806: pipetting arm upward/downward moving means
- 807: rack conveyance control unit
- 808: rack conveyance means
- 821: communication means
- 822: transducer driving means
- 823: power supply management means

## Claims

1. An ultrasonic cleaner comprising:
a cleaning tank including a liquid storage portion for storing a liquid; and
an ultrasonic transducer including a piezoelectric element and a front mass;
wherein the cleaning tank is provided, in a side surface portion thereof, with a through hole having an opening portion on an outer wall surface of the cleaning tank and on an inner wall surface of the liquid storage portion,
the front mass is inserted in the through hole,
a cover is installed so as to cover an upper side of a tip end surface of the front mass, and
the cover is movable at least in an upward direction.

2. The ultrasonic cleaner according to claim 1, wherein a plurality of the ultrasonic transducers is installed on the side surface portion of the cleaning tank.

3. The ultrasonic cleaner according to claim 1, wherein
a pipetting nozzle as an object to be cleaned can be inserted in the liquid storage portion, and
the cover is provided with a cleaning hole having an inner diameter larger than an outer diameter of the pipetting nozzle.

4. The ultrasonic cleaner according to claim 3, wherein the cover has a limited movable range in a horizontal direction, so as to be maintained at a state of being separated from the pipetting nozzle inserted through the cleaning hole.

5. The ultrasonic cleaner according to claim 3, wherein
an upper block covering the front mass is installed on the cleaning tank, and
the upper block is provided with a liquid-pouring opening portion for injecting a liquid into the liquid storage portion.

6. The ultrasonic cleaner according to claim 5, wherein the upper block is provided with a cleaning opening portion for inserting the pipetting nozzle.

7. The ultrasonic cleaner according to claim 4, wherein the cover covers a range from 60 degrees to 90 degrees with respect to a direction of a central axis of the front mass, assuming that an origin point is at a center of the tip end surface, which is a point at which the central axis of the front mass intersects the tip end surface of the front mass.

8. The ultrasonic cleaner according to claim 5, wherein the liquid-pouring opening portion in the upper block is provided between the tip end surface of the front mass and the through hole in which the front mass is inserted.

9. The ultrasonic cleaner according to claim 5, wherein the upper block is structured such that the upper block can be removed from the cleaning tank to expose the front mass.

10. The ultrasonic cleaner according to claim 1, wherein the cover is made of a resin or a metal.

11. The ultrasonic cleaner according to claim 3, wherein
the upper block covering the front mass is installed on the cleaning tank,
the upper block is provided with two liquid-pouring opening portions for injecting a liquid into the liquid storage portion, and a cleaning opening portion for inserting the pipetting nozzle, and
the cleaning opening portion is provided between the two liquid-pouring opening portions.

12. The ultrasonic cleaner according to claim 1, wherein the cleaning tank is provided, on an inner wall surface thereof, with a protruding portion that comes in contact with the cover.

13. An automatic analysis device comprising the ultrasonic cleaner according to claim 1,
wherein the automatic analysis device includes a mechanism for conveying the ultrasonic cleaner through a conveyance line and for cleaning a pipetting nozzle.
